**Europäisches Patentamt**

**European Patent Office**

**Office européen des brevets**

(19)

(11) Publication number: **0 060 894**
**A1**

(12) # EUROPEAN PATENT APPLICATION
published in accordance with Art. 158(3) EPC

(21) Application number: **81902605.5**

(22) Date of filing: **22.09.81**

Data of the international application taken as a basis:

(86) International application number:
**PCT/JP81/00251**

(87) International publication number:
**WO82/01252 (15.04.82 82/10)**

(51) Int. Cl.³: **G 01 P 3/44**
**G 01 P 3/46, G 01 P 3/48**
**H 02 K 29/02, H 02 K 21/00**

(30) Priority: **25.09.80 JP 132265 80**

(43) Date of publication of application:
**29.09.82 Bulletin 82/39**

(84) Designated Contracting States:
**DE FR GB**

(71) Applicant: **FUJITSU FANUC LIMITED**
5-1, Asahigaoka, 3-chome
Hino-shi, Tokyo 191(JP)

(72) Inventor: **KOZAI, Yoshinori**
16-3 Hirayama 2-chome
Hino-shi Tokyo 191(JP)

(72) Inventor: **AMEMIYA, Yoichi**
1019-357, Nishiterakatamachi
Hachioji-shi Tokyo 192-01(JP)

(72) Inventor: **IWAMATSU, Noboru**
3-27, Tamadaira
Hino-shi Tokyo 191(JP)

(74) Representative: **Blumbach Weser Bergen Kramer**
Zwirner Hoffmann Patentanwälte
Radeckestrasse 43
D-8000 München 60(DE)

(54) **D.C. GENERATOR TYPE NON-CONTACT SPEED SENSING DEVICE.**

(57) In a D. C. generator type non-contact speed sensing device comprising a cylindrical rotor (1) with the magnetic N and S poles (N, S) alternating around the periphery and a stator (2) disposed confronting the rotor (1), the magnetic poles (N, S) of the rotor are arranged so as to divide the whole periphery equally and the windings ($W_1$, $W_2$, $W_3$, $W_4$) of the stator are arranged so that the distance between the wound parts in each of the windings ($Z_1$, $Z_2$, $Z_3$, $Z_4$ as shown in the drawing in respect to the winding $W_1$) is different from the distance between the magnetic poles (N, S) of the rotor and, therefore, the relation between the phase of the magnetic pole and that of the wound part is not the same for every wound part. As a result, the phase of the ripple component due to slot ripple in the electromotive force induced in each wound part is different from that in the others, so that the components counterbalance each other in a resultant one-phase output so as to improve the accuracy of speed sensing.

*Fig. 4*

DESCRIPTION

TITLE OF THE INVENTION
DIRECT CURRENT GENERATOR TYPE NON-CONTACT SPEED
DETECTING DEVICE
TECHNICAL FIELD

The present invention relates to a direct current generator type non-contact speed detecting device. More specifically, the present invention relates to a direct current generator type non-contact speed detecting device in which pulsation of the waveform of the output voltage caused by a slot ripple is reduced.

BACKGROUND ART

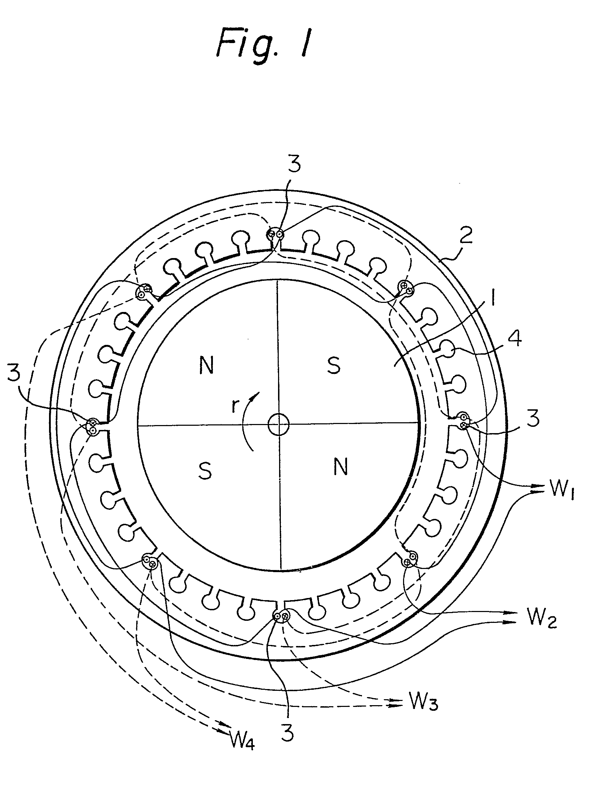

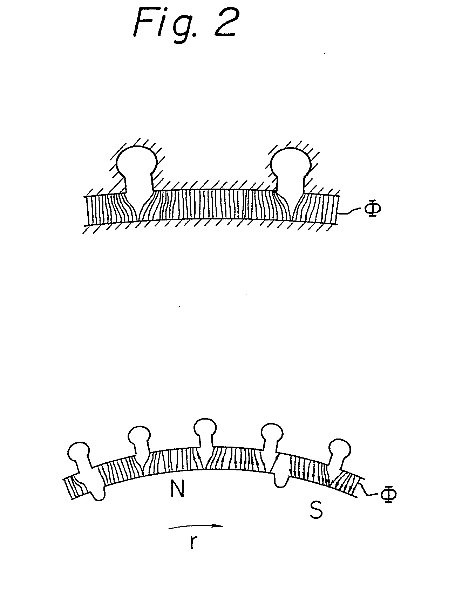

A conventional direct current generator type non--contact speed detecting device is shown in Fig. 1. Referring to Fig. 1, in a generator comprising a cylindrical rotor 1 including magnetic poles having poles N and S arranged alternately and a stator 2 arranged to confront the rotor 1, a multiphase trapezoidal wave alternating current obtained from respective phases $W_1$, $W_2$, $W_3$ and $W_4$ of a winding of the stator is switched in the flat portion to obtain a direct current voltage output. In the device shown in Fig. 1, the winding $W_1$ of the stator includes winding portions 3, the number of which is the same as the number of the poles of the rotor 1. Each winding portion 3 of the stator winding is wound on a slot 4 formed on the stator 2. In this case, 32 slots are equidistantly formed along the circumferential direction. This slot number of 32 is an integral number of times the number of the magnetic poles of the stator 1, that is, 4. The magnetic flux density distribution between the stator 2 and the rotor 1 in the vicinity of the slot is diagrammatically shown in Fig. 2. As shown in Fig. 2, because of the presence of the slot, the magnetic flux density is concentrated on both the ends of the slot.

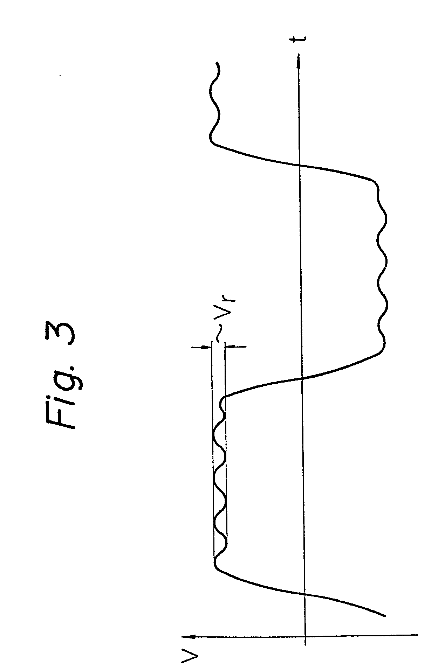

In the device shown in Fig. 1, since the magnetic flux density is concentrated on both the ends of the slots because of the presence of the slot, the distribution of the magnetic flux density is changed according to the positional relation between the poles of the rotor and the slots of the stator. When the rotor is rotated at a constant speed in the direction of arrow r, a trapezoidal wave alternating current, as shown in Fig. 3, is generated in each phase of the stator windings. In this trapezoidal wave alternating current, pulsation, called slot ripple $V_r$ , is caused to appear in the flat portion of the trapezoidal wave because of the non-uniformity of the magnetic flux density distribution due to the presence of the slots. Accordingly, pulsation due to the slot ripple also appears in a direct current voltage output of the speed detecting device, which is obtained by switching the output waveform of each phase, resulting in a reduction of the precision of detection of the speed.

The present invention proposes a speed detecting device in which the above-mentioned problem of the conventional technique is solved.

DISCLOSURE OF THE INVENTION

It is a primary object of the present invention to provide a direct current generator type non-contact speed detecting device, in which, in order to solve the above problem of the conventional technique, intervals of the winding portions of the stator winding are deviated from intervals of the poles of the rotor, whereby a pulsating component, due to a slot ripple in the direct current voltage output of the speed detecting device, is reduced and the precision of the speed detecting device is increased.

In accordance with the present invention, there is provided a direct current generator type non-contact speed detecting device, which comprises a cylindrical rotor having magnetic N and S poles arranged alternately along the circumference of said rotor and a stator arranged around said rotor forming an appropriate air gap between said rotor and stator, wherein the poles of the magnetic poles of the rotor are arranged so that the entire circumference of said rotor is divided into n equal portions, while winding portions of the stator winding are arranged so that the entire circumference of said stator is divided into n' equal portions where n' is a number slightly different from n, whereby pulsation of the waveform of the output voltage caused by a slot ripple is reduced.

BRIEF EXPLANATION OF THE DRAWINGS

Fig. 1 is a schematic diagram showing the structure of a conventional direct current generator type non-contact speed detecting device.

Fig. 2 is an enlarged diagram showing the magnetic flux density distribution between the stator and rotor in the device shown in Fig. 1.

Fig. 3 is a waveform diagram showing the output voltage generated in each phase of the stator winding in the device shown in Fig. 1.

Fig. 4 is a schematic diagram illustrating the structure of one embodiment of the direct current generator type non-contact speed detecting device according to the present invention.

Fig. 5 is a characteristic diagram showing the voltage waveform of the device shown in Fig. 4.

BEST MODE FOR CARRYING OUT THE INVENTION

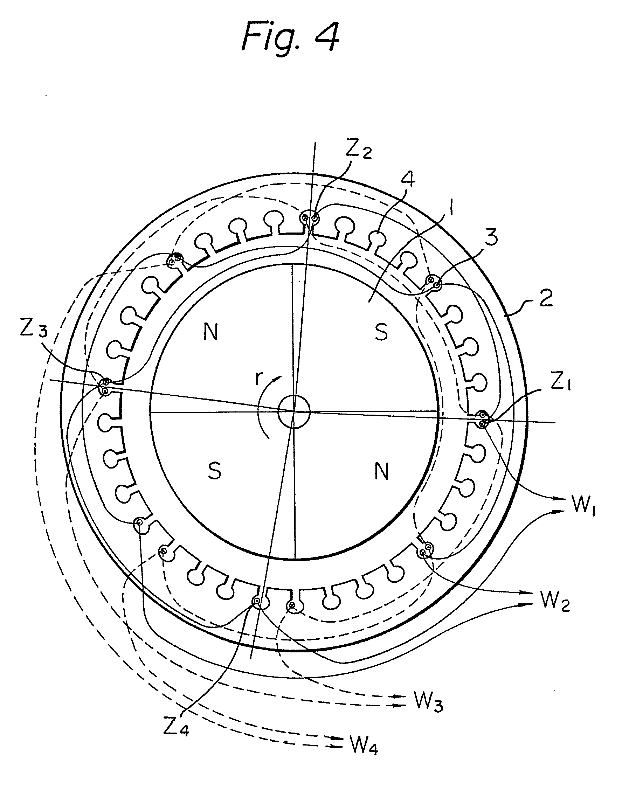

Fig. 4 illustrates the direct current generator type non-contact speed detecting device according to the present invention. The rotor 1 of the device shown in Fig. 4 is the same as the rotor of the device shown in Fig. 1. The stator 2 of the device shown in Fig. 4 is different from the stator of the device shown in Fig. 1 in that the number of slots is not 32 but 33 and these 33 slots are equidistantly formed along the circumferential direction. A wire of each phase of the winding of the stator 2 is wound at intervals of 8 slots. Accordingly, each winding portion occupies 8/33 of the circumference, whereas each winding portion occupies 1/4 of the circumference in the device shown in Fig. 1. Supposing that n is an even number, the number of portions of the magnetic poles of the rotor is 4 (n=4), while the number n' of portions of the stator winding is 33/8, which is slightly different from n. The poles of the magnetic poles of the rotor are arranged so that the circumference is divided into 4 equal portions. Accordingly, the relation between the phase of the magnetic pole and the phase of the portion of the winding is different in the respective portions of the winding.

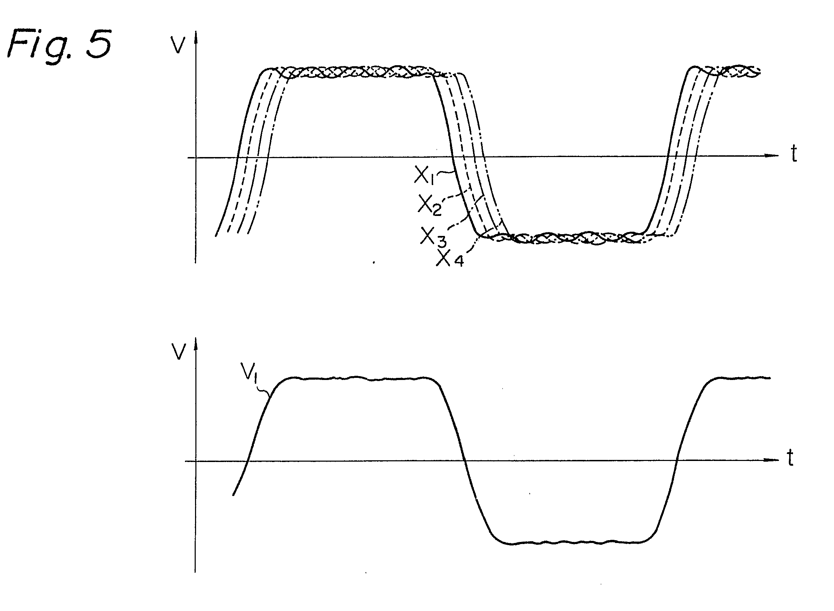

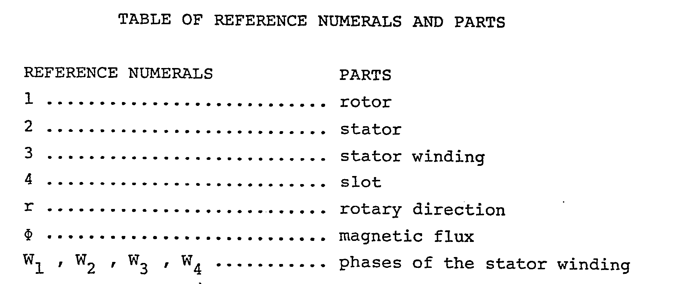

Fig. 5 shows electromotive forces $X_1$, $X_2$, $X_3$ and $X_4$ generated on the respective portions $Z_1$, $Z_2$, $Z_3$ and $Z_4$ of the winding when the rotor 1 is rotated at a constant speed in the direction of arrow r. The output voltage in one phase of the stator winding is given by the sum of the electromotive forces $X_1$, $X_2$, $X_3$ and $X_4$ generated in each portion of the winding. As shown in Fig. 5, the electromotive forces generated in each portion of the winding differ in the phase of the pulsating component caused by the slot ripple. However, if these electromotive forces are added together, the variations cancel one another, and in the output voltage of the phase as a whole, deviations due to the slot ripple are reduced. Accordingly, pulsation in the direct current voltage of the speed detecting device shown in Fig. 4 is decreased.

CLAIMS

1.  A direct current generator type non-contact speed detecting device, which comprises a cylindrical rotor having magnetic N and S poles arranged alternately along the circumference of said rotor and a stator arranged around said rotor forming an appropriate air gap between said rotor and stator, wherein the poles of the magnetic poles of the rotor are arranged so that the entire circumference of said rotor is divided into n equal portions, while winding positions of the stator winding are arranged so that the entire circumference of said stator is divided into n' equal portions where n' is a number slightly different from n, whereby pulsation of the waveform of the output voltage caused by a slot ripple is reduced.

2.  A direct current generator type non-contact speed detecting device according to claim 1, wherein the magnetic poles of the rotor includes two poles N and two poles S which are arranged so that the whole circumference is divided into 4 equal portions, 33 slots are equidistantly formed along the circumferential direction in the stator, and a wire of each phase of the winding of the stator is wound at intervals of 8 slots.

1

# Fig. 1

# Fig. 2

N

S

$\xrightarrow{r}$

Fig. 3

4

# Fig. 4

Fig. 5

0060894

## TABLE OF REFERENCE NUMERALS AND PARTS

REFERENCE NUMERALS                    PARTS

1 ............................ rotor

2 ............................ stator

3 ............................ stator winding

4 ............................ slot

r ............................ rotary direction

$\Phi$ ............................ magnetic flux

$W_1$ , $W_2$ , $W_3$ , $W_4$ ........... phases of the stator winding

# INTERNATIONAL SEARCH REPORT

International Application No PCT/JP81/00251 **0060894**

## I. CLASSIFICATION OF SUBJECT MATTER (if several classification symbols apply, indicate all) 3

According to International Patent Classification (IPC) or to both National Classification and IPC

Int. Cl.³ G01P 3/44, G01P 3/46, G01P 3/48, H02K 29/02, H02K 21/00

## II. FIELDS SEARCHED

### Minimum Documentation Searched 4

| Classification System | Classification Symbols |
|---|---|
| I P C | G01P 3/44, H02K 29/02, H02K 21/00, G01P 3/46, G01P 3/48 |

### Documentation Searched other than Minimum Documentation to the Extent that such Documents are Included in the Fields Searched 5

| | |
|---|---|
| Jitsuyo Shinan Koho | 1935 – 1981 |
| Kokai Jitsuyo Shinan Koho | 1971 – 1981 |

## III. DOCUMENTS CONSIDERED TO BE RELEVANT 14

| Category * | Citation of Document, 16 with indication, where appropriate, of the relevant passages 17 | | Relevant to Claim No. 18 |
|---|---|---|---|
| A | JP,A,50-71365 | 1975-6-13 | 1 |
| | Nippon Electric Co., Ltd. | | |
| A | JP,A,53-106179 | 1978-9-14 | 1 |
| | Electrocraft Corporation | | |
| A | US,A,3903462 | 1975-9-2 | 1 |
| | Siemens A.G. | | |
| A | JP,A,56-14951 | 1981-2-13 | 1 |
| | FUJITSU FANUC LIMITED | | |
| A | GB,A,913170 | 1960-10-6 | 1 |
| | FERRANTI Ltd. | | |
| A | JP,B2,52-37570 | 1977-9-22 | 1 |
| | Fiziko | | |
| A | JP,B1,37-6360 | 1962-6-28 | 1 |
| | Japax | | |
| A | JP,B1,36-21409 | 1961-11-8 | 1 |
| | Japax | | |
| A | JP,B1,35-14968 | 1960-10-10 | 1 |
| | Nippon Hoden Kako | | |

* Special categories of cited documents: 15

"A" document defining the general state of the art
"E" earlier document but published on or after the international filing date
"L" document cited for special reason other than those referred to in the other categories
"O" document referring to an oral disclosure, use, exhibition or other means

"P" document published prior to the international filing date but on or after the priority date claimed
"T" later document published on or after the international filing date or priority date and not in conflict with the application, but cited to understand the principle or theory underlying the invention
"X" document of particular relevance

## IV. CERTIFICATION

| Date of the Actual Completion of the International Search 2 | Date of Mailing of this International Search Report 2 |
|---|---|
| December 9, 1981 (09.12.81) | January 7, 1982 (07.01.82) |

| International Searching Authority 1 | Signature of Authorized Officer 20 |
|---|---|
| Japanese Patent Office | |

Form PCT/ISA/210 (second sheet) (October 1977)